# EUROPÄISCHE PATENTSCHRIFT

(11) **EP 1 104 916 B1**
(45) Veröffentlichungstag und Bekanntmachung des Hinweises auf die Patenterteilung: **11.05.2011**
(21) Anmeldenummer: 99124255.3
(22) Anmeldetag: 04.12.1999
(51) Int. Cl.: G06T 9/00

(54) **Verfahren zur Kompression von gescannten Farb- und/oder Graustufendokumenten**
Method for compressing color and/or grey-level scanned documents
Procédé de compression de documents scannés en couleur et/ou en niveaux de gris

(43) Veröffentlichungstag der Anmeldung: 06.06.2001
(73) Patentinhaber: LuraTech Imaging GmbH, 42855 Remscheid (DE)
(72) Erfinder: Barthel, Kai Uwe, 12159 Berlin (DE); McPartlin, Simon, 10245 Berlin (DE); Thierschmann, Michael, 14197 Berlin (DE)
(74) Vertreter: Carlsohn, Alexander

(56) Entgegenhaltungen:
- EP-A- 0 320 755
- EP-A- 0 325 372
- EP-A- 0 448 226
- WO-A-96/24114
- US-A- 4 916 744
- US-A- 5 371 606
- US-A- 5 778 092
- DE QUEIROZ,R.L.: "Compression of compound documents" PROC. 6TH INT. CONF. IMAGE PROC. (ICIP'99), Bd. 1, 24. - 28. Oktober 1999, Seiten 209-213, XP000904843 Kobe (Japan)

## Beschreibung

Die Erfindung betrifft ein Verfahren zur Kompression von gescannten Farb- bzw. Graustufendokumenten, wobei das digitale Bild des gescannten Dokuments in drei Bildebenen zerlegt wird. Diese Bildebenen sind ein Vordergrundbild, ein Hintergrundbild und ein binäres Maskenbild. Das Maskenbild beschreibt, welche Bereiche des Dokuments zum Vordergrund bzw. zum Hintergrund gehören. Bestandteile des Vordergrundes sind Text und graphische Elemente. Die Farbigkeit bzw. die Intensität dieser Vordergrundbereiche wird durch das Vordergrundbild beschrieben. Zu den Hintergrundbereichen zählen der Texthintergrund sowie die im Dokument enthaltenen Bilder. Die Farb- bzw. Helligkeitsinformation des Hintergrundes sowie die in dem Dokument enthaltenen Bilder sind im Hintergrundbild enthalten. Jedes der drei Bilder wird für sich mit einem geeigneten Bildkodierungsverfahren kodiert. Bei der Dekodierung wird das Dokument aus dem Vordergrund- und Hintergrundbild wieder zusammengesetzt. Hierbei beschreibt das binäre Maskenbild, in welchen Bereichen das rekonstruierte Dokument aus dem Vordergrundbild bzw. aus dem Hintergrundbild zu erzeugen ist.

Bei geeigneter Zerlegung des Dokuments in die beschriebenen drei Bildebenen lassen sich mit dieser Repräsentation deutlich bessere Kompressionsergebnisse als mit Bildkodierungsverfahren erzielen, die das Dokument als Ganzes kodieren. Die Erfindung beschreibt ein neues Verfahren zur Bestimmung des binären Maskenbildes sowie eine Methode zur effizienten Zerlegung des Originaldokuments in die Vordergrund- und Hintergrundbilder. Hierbei werden keinerlei spezielle Annahmen über Art oder Aufbau des Dokuments vorausgesetzt.

### Stand der Technik

Dokumente, die mit hohen Auflösungen gescannt werden, benötigen sehr viel Speicherplatz für die anfallenden digitalen Bilddaten. So ergeben sich bei einem 300 dpi Scan einer farbigen A4-Seite ca. 25 Millionen Bytes, bei einem farbigen 600 dpi Scan sogar ca. 100 Millionen Bytes. Dokumente mit Datenmengen dieser Größenordnung lassen sich unkomprimiert nur in geringen Mengen archivieren, eine Übertragung über Netzwerke mit niedrigen Übertragungsraten ist praktisch unmöglich.

Verlustlose Kompressionsverfahren wie der verlustlose Modus des JPEG Standards (JPEG-LS) oder Lempel-Ziv Welch (LZW) ermöglichen nur sehr geringe

Kompressionsfaktoren. Höhere Kompressionsfaktoren sind nur durch den Einsatz verlustbehafteter Kompressionsverfahren möglich. Als Standardverfahren ist das DCTbasierte "JPEG-Verfahren" der Joint Pictures Expert Group zu nennen. Jedoch weder das JPEG-Verfahren noch neuere, bessere Wavelet-basierte Kompressionsverfahren lassen sich für die hochgradige Kompression von gescannten Dokumenten einsetzen. Diese reinen Bildkompressionsverfahren setzen die Statistik von typischen Bildsignalen voraus, die durch eine hohe örtliche Korrelation gekennzeichnet ist. Da bei gescannten Dokumenten diese Annahmen nicht zutreffen, werden bei hohen Kompressionsfaktoren die textuellen Anteil der Dokumente derart stark verändert, daß ein Lesen des Textes unmöglich wird. Gegenwärtig werden Dokumente zur Archivierung üblicherweise binär gescannt und mit den CCITT Fax-Kompressionsstandards "Fax Group 3" bzw. "Fax Group 4" komprimiert. Bei diesen rein binären Kompressionsverfahren bleibt die Lesbarkeit im allgemeinen erhalten, jedoch gehen die Helligkeits- und Farbinformationen der Bildanteile vollständig verloren.

Ein neuer Ansatz, der diese Probleme umgeht, ist der aktuell in der Planung befindliche Mixed Raster Content Standard (MRC) (ITU Empfehlung T.44). Danach ist es möglich, ein Dokument in Regionen unterschiedlicher örtlicher Auflösung zu unterteilen, die auf unterschiedliche Weise kodiert werden können. Ein Modus des MRC-Standards ist ein Multilayerkodierungsmodus, der eine Zerlegung des Dokuments in die drei zuvor beschrieben Ebenen vorsieht. Im MRC-Standard wird jedoch ausschließlich der Dekodierungsprozeß eindeutig festgelegt, es gibt keine Vorgaben, wie die Zerlegung des Dokuments in die drei Bildebenen bei der Kodierung zu realisieren ist. Ein Verfahren, welches diesen Multilayerkodierungsmodus verwendet, ist in US Patent Nummer 5,778,092 beschrieben. Es setzt jedoch Bedingungen voraus, die in vielen zu bearbeitenden Dokumenten nicht anzutreffen sind: Die Form von Bildern wird grundsätzlich als rechteckig vorausgesetzt. Eine Hinterlegung von Text mit Hintergrundbildern bzw. das Vorhandensein von Text innerhalb von Bildern ist nicht vorgesehen. Weiterhin muß der Dokumentenhintergrund grundsätzlich weiß bzw. hell sein.

<Aus De Queiroz, R. L., ist die Zerlegung eines Dokumentes ein Vordergrundbild und ein Hintergrundbild, wobei Text und Bilder getrennt werden sollen "Compression of compound documents" PROC. 6TH INT. CONF. IMAGE PROC. (ICIP'99), Bd. 1, 24. - 28. Oktober 1999, Seiten 209-213>

Ziel der Erfindung ist es, die Kompression gescannter Dokumente ohne Einschränkungen an die Beschaffenheit der Vorlagen, wie heller Hintergrund, rechteckige Abbildungen, exakte Trennung von Bild- und Textbestandteilen, zu ermöglichen. Darüber hinaus soll der Aufwand an Rechenzeit und Speicherkapazität deutlich gesenkt werden. Weiterhin sollen unterschiedliche Dokumentenklassen und Bilder über wenige Steuerparameter nach einem einheitlichen Verfahren komprimiert werden.

Ausgehend von der Repräsentation des Dokuments in den drei Ebenen - Vordergrund-, Hintergrund- und Maskenbild - ist der grundsätzliche Ablauf des erfindungsgemäßen Kompressionsverfahrens im Hauptanspruch 1 dargestellt. Detaillierte, vorteilhafte Ausgestaltungen der aufeinanderfolgenden Verfahrensschritte sind in den Unteransprüchen 2 bis 7 enthalten.

Zunächst wird aus dem definiert verkleinerten Originaldokument mit einem adaptiven Schwellwertverfahren ein lokal variables Schwellwertbild erzeugt und wieder auf die Größe des Originaldokumentes gebracht. Das Originalbild wird anschließend mit diesem Schwellwertbild quantisiert, um ein bitonales Quantisierungsbild herzustellen. Anhand dieses Quantisierungsbildes und dem Originalbild wird danach eine Textdetektion (Segmentierung) durchgeführt, welche das Dokument in Vordergrund- und Hintergrundregionen unterteilt. Hierbei werden Regionen wie Text und graphische Elemente dem Vordergrundbild, Texthintergrund und Bilder dem Hintergrundbild zugeordnet. Das Ergebnis dieser Segmentierung wird im binären Maskenbild abgelegt. Das binäre Maskenbild hat die gleiche Größe bzw. Auflösung wie das Originalbild. Anschließend wird aus dem Originalbild und dem Maskenbild das Vordergrundbild erzeugt, welches die Farbigkeit der Vordergrundregionen beschreibt. Dieses Vordergrundbild besitzt eine gegenüber dem Originalbild reduzierte Auflösung. Aus dem Komplement des bitonalen Maskenbildes und dem Originalbild wird danach das Hintergrundbild wiederum mit verringerter Auflösung erzeugt. Die drei Bilder werden anschließend jeweils mit einem geeigneten Bildkoder kodiert.

Die Quantisierung bzw. Binärisierung des Originaldokuments geschieht in zwei Schritten: Zunächst wird mit einem adaptiven Verfahren ein lokal variabler Schwellwert bestimmt. Der Vergleich der Grauwertrepräsentation des Originaldokuments mit diesem Schwellwert liefert das binäre Quantisierungsbild.

Liegt das Originaldokument als farbiges Dokument vor, wird es zunächst in ein Graustufenbild und zwei Farbdifferenzkomponentenbilder umgewandelt. Zur Bestimmung des lokal variablen Schwellwertbildes wird das Graustufenbild verwendet. Das Graustufenbild, welches normalerweise mit einer Auflösung von 150 bis 600 dpi vorliegt, wird auf eine geeignete Größe verkleinert. Hierzu wird eine Tiefpaßfilterung mit anschließender Unterabtastung durchgeführt. Durch die Verkleinerung werden örtliche Störungen des Originalscans wie Rauschen, Dither- oder Rastereffekte verringert, wodurch sich verläßlichere Schwellwerte bestimmen lassen. Weiterhin wird hierdurch der Rechenaufwand zur Bestimmung der Schwellwerte reduziert.

Als nächstes wird eine lokale Dynamikanalyse durchgeführt. Hierzu wird das verkleinerte Graustufenbild einer Minimum- und Maximumfilterung unterzogen.

Die Differenz aus Maximum- und Minimumbild erzeugt ein Dynamikbild, welches Hinweise auf Regionen mit starken Kanten, z. B. in Textregionen, liefert.

Das Dynamikbild wird im nächsten Schritt mit einer extern vorgebbaren Mindestdynamik verglichen, welche die Empfindlichkeit der Quantisierung und der Textdetektion steuert. In Regionen, deren Dynamik diesen Mindestwert überschreitet, wird ein Quantisierungsschwellwert bestimmt, der sich aus der Hälfte der Summe aus Minimum- und Maximumbild berechnet. In Regionen, deren Dynamik zu gering ist, wird der Quantisierungsschwellwert zunächst auf Null gesetzt.

Da die so bestimmten Schwellwerte starken örtlichen Schwankungen unterliegen und ihre Maxima jeweils im helleren Bereich einer Kante zu finden sind, wird als nächster Schritt eine Mittelwertbildung für alle Schwellwerte ungleich Null durchgeführt.

Diese gemittelten Schwellwerte werden jetzt auf angrenzende Pixel ausgedehnt.

Im letzten Schritt werden alle verbleibenden Pixel, für die noch keine Schwellwert existiert, mit einem Kern ausgefüllt, der aus dem Mittelwert über alle Werte ungleich Null gebildet wird. Neu berechnete Werte werden direkt in das Schwellwertbild zurückgeschrieben, wodurch es möglich ist, für alle Pixel des Bildes einen Schwellwert mit nur einem Durchlauf zu bestimmen.

Da das jetzt bestimmte Schwellwertbild kleiner als das Originaldokument ist, muß es zur Quantisierung wieder auf die Originalgröße gebracht werden. Die Vergrößerung erfolgt mittels bilinearer Interpolation. Hierdurch ergeben sich bei der anschließend durchgeführten Quantisierung weniger Störungen als bei einer einfachen Vergrößerung durch Pixelwiederholungen, was zu verbesserten Kodierungsergebnissen für das im folgenden erzeugte binäre Maskenbild führt.

Das erzeugte binäre Quantisierungsbild ist Ausgangspunkt für den zweiten Bereich des erfindungsgemäßen Verfahrens, die Textdetektion.

Ziel der Textdetektion (Segmentierung) ist es, das binäre Maskenbild zu erzeugen, welches eine Pixel-individuelle Zuordnung in Vordergrund- und Hintergrundregionen beschreibt. Textuelle und graphische Strukturen, die zum Vordergrund gehörig detektiert wurden, werden im binären Maskenbild schwarz repräsentiert, Hintergrundregionen weiß.

Die Segmentierung erfolgt erfindungsgemäß, indem, alle verbundenen Regionen gleichen Wertes des Quantisierungsbildes als mögliche Kandidaten für Vordergrundbestandteile beurteilt werden. Dazu werden sie nach diversen Kriterien auf ihre Zugehörigkeit zum Vordergrund hin untersucht. Die als Vordergrund segmentierten Regionen, werden in das binäre Maskenbild eingetragen.

Während der Segmentierung ist das Maskenbild zunächst noch nicht binär und kann die Zustände: "noch nicht untersucht", "Vordergrund", "Hintergrund" und "Loch" annehmen.

Als erster Schritt werden alle verbundenen Regionen des Quantisierungsbildes identifiziert. Hierbei wird für Dokumente mit hoher Auflösung eine Vierer-Nachbarschaft verwendet, bei geringen Auflösungen wird eine Achter-Nachbarschaft angewendet.

Sind die Regionen bestimmt, wird eine Größenfilterung durchgeführt. Abhängig von der Auflösung des Dokuments existiert eine Mindestgröße und eine Maximalgröße, die nicht unter- bzw. überschritten werden darf. Regionen, die im zulässigen Bereich liegen, werden weiter untersucht, anderenfalls werden sie verworfen.

Als nächster Schritt erfolgt eine Kantendetektion. Hierzu werden alle Randpixel der Region mit Hilfe an sich bekannter Kantenfilter untersucht, wobei die Kantenaktivität durch den Absolutwert der Filterantwort bestimmt wird.

Um Kanten besser von Rastereffekten oder Rauschen unterscheiden zu können, wird die ermittelte Kantenaktivität mit einem Mindestaktivitätswert verglichen. Ist die Kantenaktivität geringer als dieser Mindestwert, so wird sie zu Null gesetzt.

In einem weiteren Schritt werden jetzt die mittlere und die maximale Kantenaktivität für den Rand der Region und für den Innenbereich der Region zusätzlich die Varianz bestimmt.

Als nächstes wird geprüft, ob sowohl die mittlere als auch die maximale Kantenaktivität über vorgegebenen Mindestwerten liegen und außerdem die Varianz des Innenbereichs einen Maximalwert nicht überschreiten.

Bei positivem Ergebnis wird die aktuelle Region als Vordergrundregion klassifiziert und als solche ins Maskenbild eingetragen. Für den Fall, daß diese Region eine andere bereits als Vordergrund klassifizierte berührt, wird sie als "Loch" eingetragen. Ist der Test negativ, handelt es sich um eine Hintergrundregion, die ebenfalls ins Maskenbild eingetragen wird.

Nach der Klassifizierung wird das Maskenbild binärisiert. Hierzu werden die Vordergrundregionen auf schwarz, alle restlichen Regionen auf weiß gesetzt.

Die Segmentierung kann in unterchiedlichen Modi durchgeführt werden: Die bisher beschriebene Verfahrensweise entspricht einem ersten Modus, der auch normalen und inversen Text zu detektieren vermag. Für viele Dokumente, wie z. B. einfache Briefe, in denen kein inverser Text vorkommt, kann ein zweiter Modus verwendet werden, der nur die schwarzen verbundenen Regionen des Quantisierungsbildes untersucht Ein dritter , nicht erfindungsgemäβe Modus ist für extrem schwer zu segmentierende Dokumente wie z. B. Landkarten sinnvoll, hierbei werden alle schwarzen Regionen des Quantisierungsbildes automatisch als Vordergrundregionen angenommen, hierdurch lassen sich auch bei schwer zu segmentierenden Dokumenten zufriedenstellende Kodierungsergebnisse erzielen. Der vierte , nicht erfindungsgemäβe Modus besteht darin, direkt alle Pixel als Hintergrundpixel zu klassifizieren, was bei der Kodierung von reinen Bilddokumenten sinnvoll ist.

Im folgenden werden die Vordergrund- und Hintergrundbilder ermittelt. Hierbei müssen zwei Aspekte erfüllt werden. Einerseits sollen Vordergrundbild bzw. Hintergrundbild die Intensitäten des Originalscans möglichst gut repräsentieren, so daß auch bei fehlerhafter Segmentierung keine visuellen Artefakte entstehen. Andererseits muß die Struktur der entstehenden Bilder möglichst einfach sein, um eine effiziente Kodierung zu gewährleisten.

Anhand des binären Maskenbildes und des Originalbildes wird das verkleinerte Vordergrundbild erzeugt.

Zunächst werden alle zum Vordergrund gehörigen Regionen im binären Maskenbild identifiziert. Da die Randwerte der Regionen fehlerhafte Intensitäten bzw. Farbigkeiten aufweisen, werden die Vordergrundregionen grundsätzlich um einen Pixel verdünnt, wobei jedoch mindestens das Skelett der Region erhalten bleibt.

Das Originalbild und das verdünnte binäre Maskenbild werden in Blöcke zerlegt. Hierbei entspricht die Kantenlänge der Blöcke dem Verkleinerungsfaktor. Enthält ein Block einen Anteil der verdünnten Vordergrundregion, so wird über diesen Anteil der Mittelwert der entsprechenden Pixel des Originaldokuments gebildet und an die korrespondierende Stelle im verkleinerten Vordergrundbild geschrieben. Enthält ein Block keine verdünnte Vordergrundregion, so wird der Wert des Vordergrundbildes zu Null gesetzt.

Danach werden die Vordergrundpixel mit Werten ungleich Null mit einer Mittelwertfilterung für angrenzende Pixel ausgedehnt.

Im letzten Schritt werden alle verbleibenden Pixel ausgefüllt. Hierbei wird jeweils der Mittelwert über alle Werte ungleich Null gebildet. Zur Steigerung der Kodierungseftzienz wird ein konstanter Grauwert als zusätzlicher Anteil mit in die Mittelwertbildung einbezogen, um das Vordergrundbild in Regionen ohne Vordergrundregionen gegen Grau zu dämpfen. Neu berechnete Werte werden direkt in das Vordergrundbild zurückgeschrieben, wodurch es möglich ist, alle Pixel des Bildes mit nur einem Durchlauf zu bestimmen.

Die Bestimmung des Hintergrundbildes entspricht im Prinzip dem Verfahren, das zur Bestimmung des Vordergrundbildes angewendet wird, nur daß jetzt die Verarbeitung mit dem Komplement, dem inversen binären Maskenbild durchgeführt wird.

Zunächst werden alle zum Hintergrund gehörigen Regionen im binären Maskenbild identifiziert. Da die Randwerte der Regionen fehlerhafte Intensitäten bzw. Farbigkeiten aufweisen, werden auch die Hintergrundregionen um einen Pixel verdünnt, wobei jedoch mindestens das Skelett der Region erhalten bleibt.

Das Originalbild und das verdünnte inverse binäre Maskenbild werden wiederum in Blöcke zerlegt, deren Kantenlänge jetzt dem Verkleinerungsfaktor für das Hintergrundbild entspricht. Enthält ein Block einen Anteil der verdünnten Hintergrundregion, so wird über diesen Anteil der Mittelwert der entsprechenden Pixel des Originaldokuments gebildet und in das verkleinerte Hintergrundbild geschrieben. Enthält ein Block keine verdünnte Hintergrundregion, so wird das entsprechende Pixel des Hintergrundbildes zu Null gesetzt.

Im nächsten Schritt werden die Hintergrundpixel mit Werten ungleich Null mit einer Mittelwertfilterung für angrenzende Pixel ausgedehnt.

Im letzten Schritt werden alle verbleibenden Pixel ausgefüllt. Hierbei wird jeweils der Mittelwert über alle Werte ungleich Null gebildet. Neu berechnete Werte werden direkt zurückgeschrieben, wodurch es möglich ist, alle Pixel des Hintergrundbildes mit nur einem Durchlauf zu bestimmen.

Sind die drei Bilder: Vordergrund-, Hintergrund- und das binäre Maskenbild nach dem erfindungsgemäßen Verfahren erzeugt worden, werden sie mit an sich bekannten Bildkodern komprimiert.

Die Dekodierung besteht darin, das Vordergrund-, Hintergrund- und das binäre Maskenbild zunächst getrennt zu dekodieren. Die verkleinerten Hintergrund- und Vordergrundbilder werden mittels Interpolation auf die Größe des Maskenbildes vergrößert. Abhängig vom Wert des binären Maskenbildes wird dann das rekonstruierte Bild aus den Pixeln des vergrößerten Hintergrund- bzw. Vordergrundbildes zusammengesetzt.

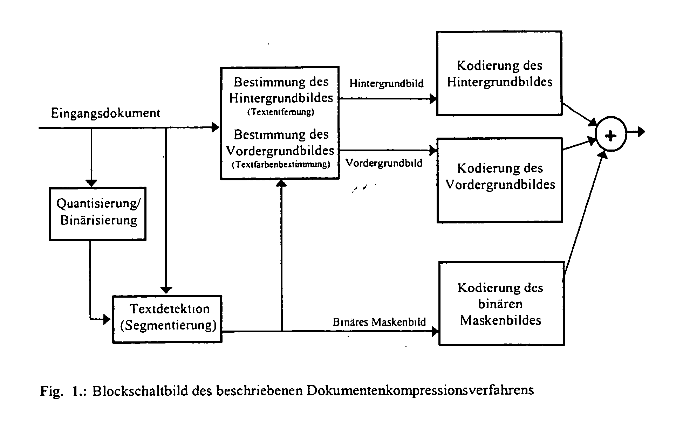

Die Erfindung soll nachstehend an einem Ausführungsbeispiel näher erläutert werden. Dazu zeigen
- - Figur1: ein Blockschaltbild des Verfahrens
- - Figur 2: die Verfahrensschritte bis zur Quantisierung des Originalbildes mit Bestimmung des Schwellwertes
- - Figur 3: die Verfahrensschritte der Textdetektion/Segmentierung
- - Figur 4: die Verfahrensschritte zur Bestimmung des Vordergrundbildes
- - Figur 5: die Verfahrensschritte zur Bestimmung des Hintergrundbildes
- - Figur 6: das Beispiel eines Originaldokumentes
- - Figur 7: das Quantisierungsbild des Originaldokumentes
- - Figur 8: das Segmentierungsergebnis

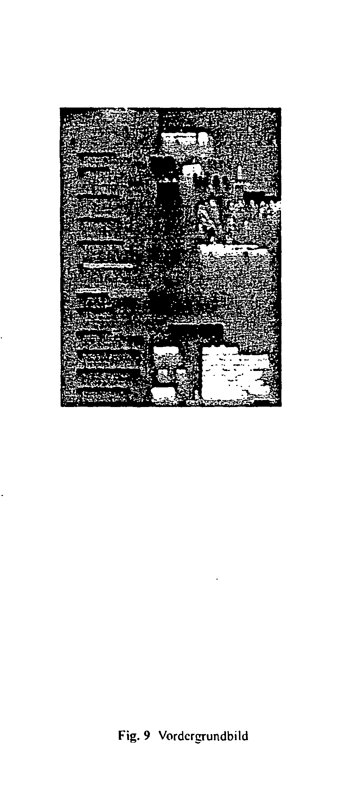

- - Figur 9: das verfahrensgemäße Vordergrundbild
- - Figur 10: das verfahrensgemäße Hintergrundbild

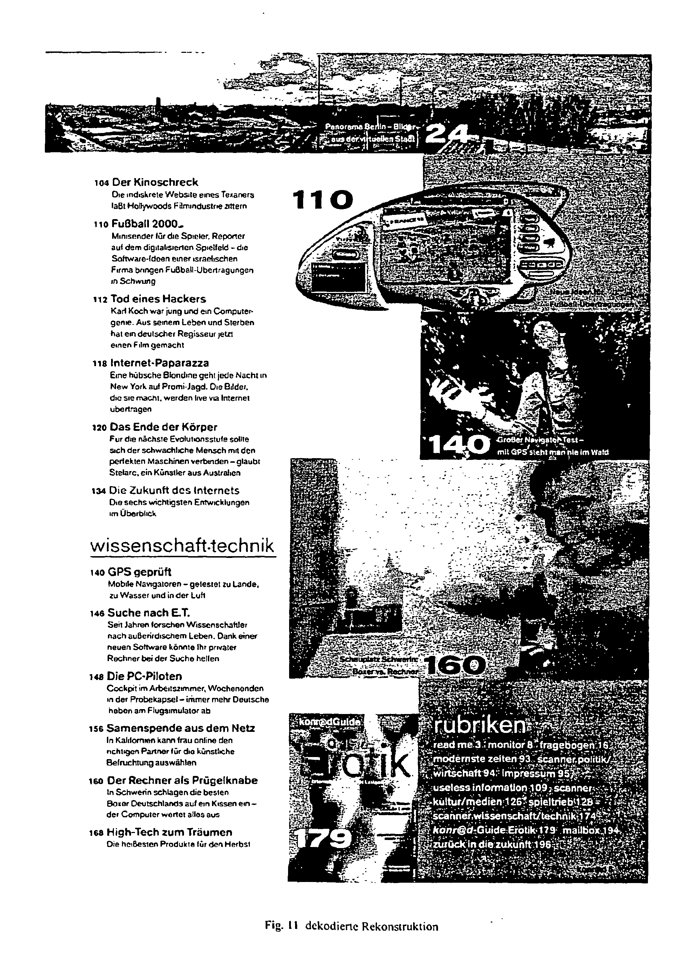

- - Figur 11: die dekodierte Rekonstruktion des Originaldokumentes.

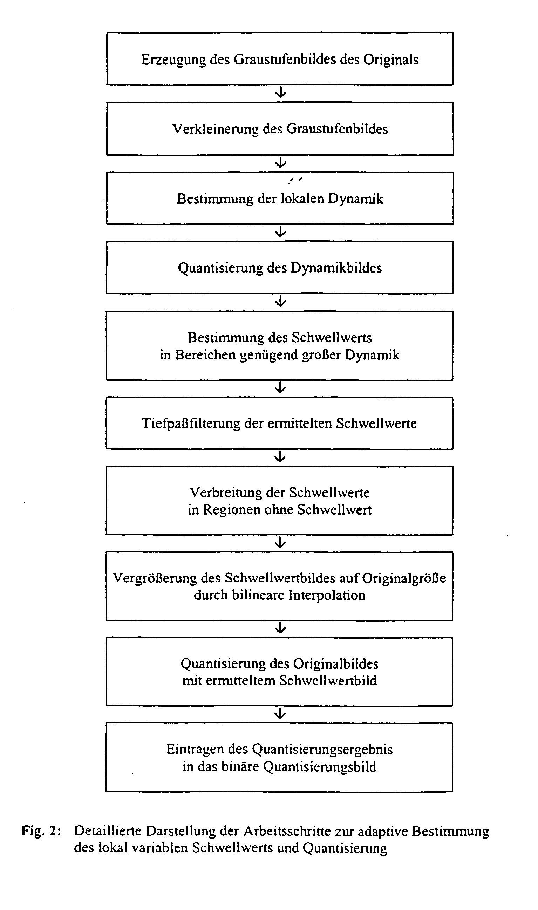

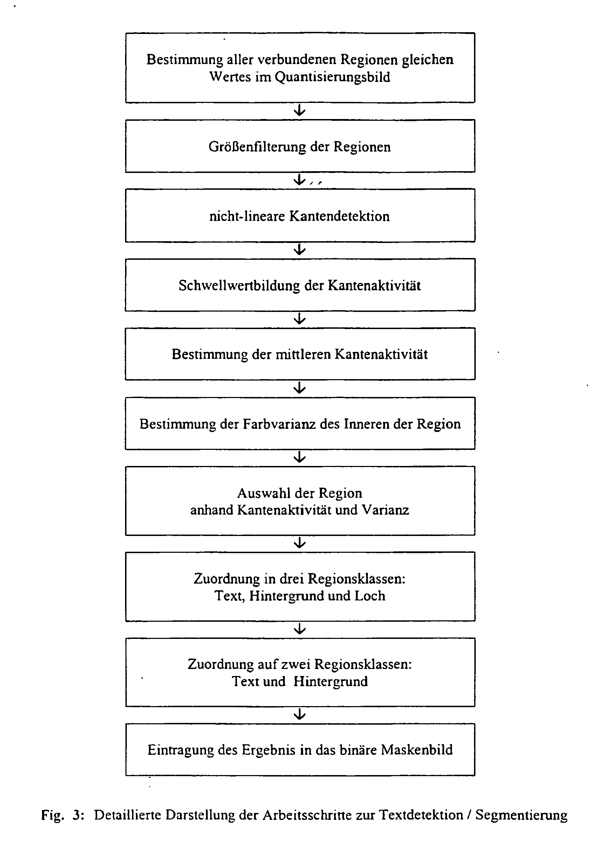

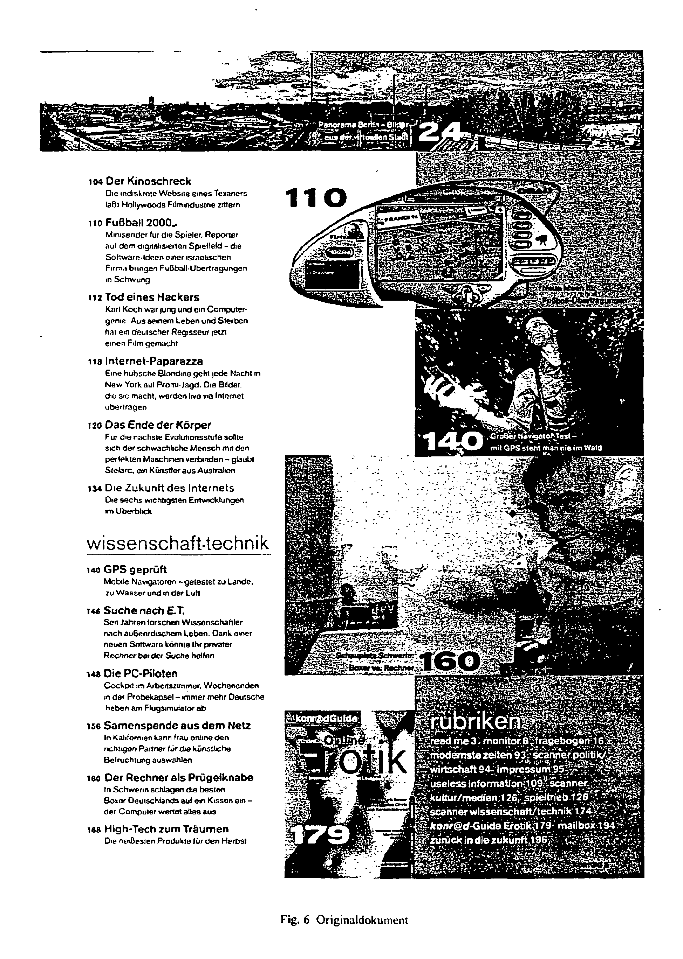

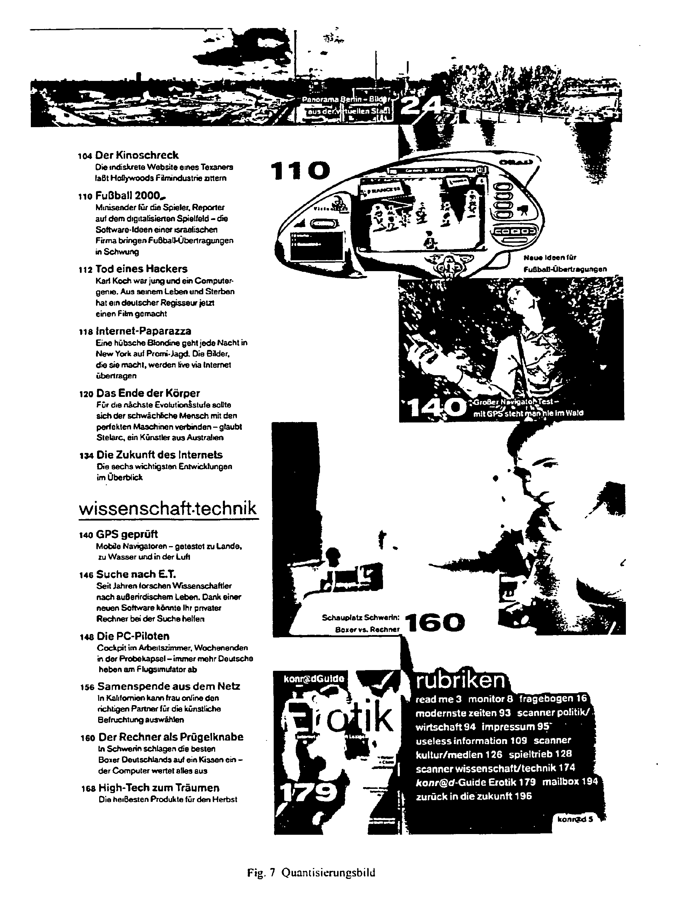

Im Beispiel liegt das Originaldokument (Fig. 6) als farbiges Dokument mit schwarzen und farbigen Textanteilen in einer Auflösung von 300 dpi vor, welches zunächst gem. Fig. 2 in ein Graustufenbild zur Bestimmung des lokal variablen Schwellwertbildes und zwei Farbdifferenz-Komponentenbilder umgewandelt wird. Das Graustufenbild wird durch eine Tiefpaßfilterung mit anschließender Unterabtastung auf 150 dpi verkleinert. Das verkleinerte Graustufenbild wird danach im Rahmen einer lokalen Dynamikanalyse einer Maximum-/Minimumfilterung mit 3x3 Kernen unterzogen. Aus der Differenz zwischen Maximum- und Minimumbild entsteht ein Dynamikbild, welches im nächsten Schritt mit einer Mindestdynamik von 55 verglichen wird. Für Bereiche, welche diesen Mindestwert überschreiten, wird die Zugehörigkeit zu einer Textregion angenommen und ein Quantisierungs-Schwellwert aus der Hälfte der Summe aus Maximum- und Minimumbild berechnet, während für Regionen mit geringerer Dynamik dieser Quantisierungsschwellwert zunächst gleich Null gesetzt wird. Alle Schwellwerte ungleich Null werden anschließend einer Mittelwertbildung mit einem 3x3 Kern unterzogen. Diese gemittelten Schwellwerte werden dann mit einer weiteren 5x5 Mittelwertfilterung auf die angrenzenden Pixel ausgedehnt. Pixel, für die noch kein Schwellwert existiert, werden abschließend mit einem 7x7 Kern ausgefüllt. Mittels bilinearer Interpolation wird das Schwellwertbild zur Quantisierung wieder auf Originalgröße gebracht. Durch Vergleich des Graustufenbildes mit dem Schwellwertbild entsteht gem. Fig. 7 ein binäres Quantisierungsbild als Grundlage für die anschließende Textdetektion (Segmentierung) gem. Fig. 3.

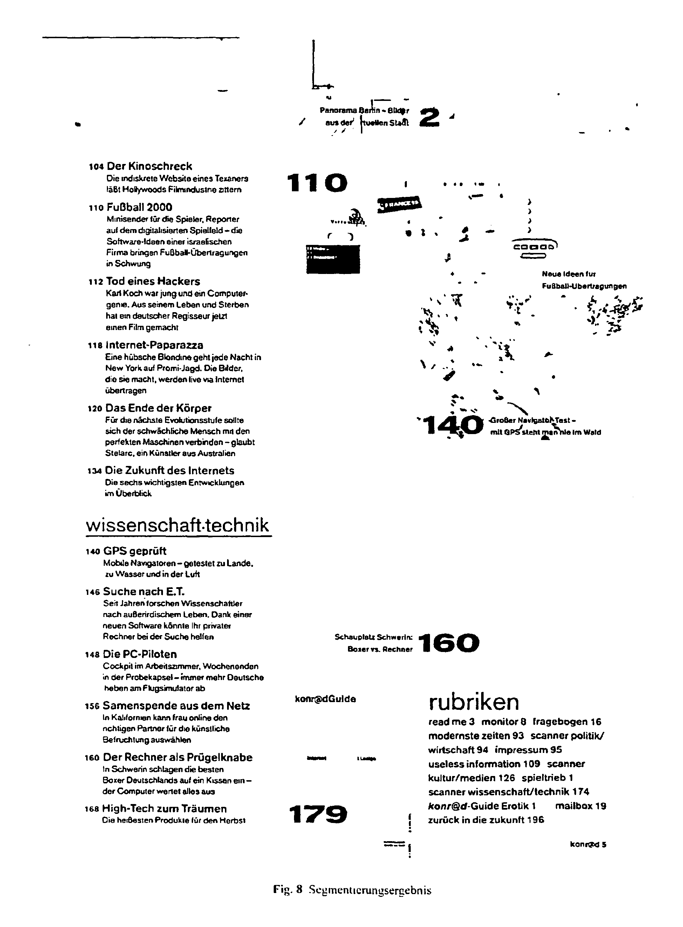

Hierzu werden zunächst alle verbundenen Regionen des gem. Fig. 2 erzeugten Quantisierungsbildes identifiziert, wobei im Beispiel eine Vierer-Nachbarschaft angewendet wird. Im Rahmen der anschließenden Größenfilterung werden eine Mindest- und eine Maximalgröße für jede zu untersuchende Region vorgegeben, die nicht unter-/überschritten werden darf. Regionen außerhalb dieses Bereiches werden im weiteren verworfen. Danach erfolgt eine nicht-lineare Kantendetektion durch Untersuchung aller Randpixel der betreffenden Region mit Hilfe je eines an sich bekannten horizontalen und vertikalen Sobelfilters und eines Laplacefilters. Die ermittelte Kantenaktivität wird mit einem Mindestaktivitätswert verglichen und bei dessen Unterschreitung zu Null gesetzt. Die mittlere und maximale Kantenaktivität sowie Varianz des Innenbereiches werden in einem nächsten Schritt bestimmt und anschließend geprüft, ob sowohl die mittlere als auch die maximale Kantenaktivität über vorgegebenen Mittelwerten liegen und die Varianz des Innenbereiches einen Maximalwert nicht überschreitet. Bei positivem Ergebnis wird die aktuelle Region als Vordergrundregion klassifiziert und in das Maskenbild eingetragen. Berührt sie eine andere bereits eingetragene Vordergrundregion, wird sie als "Loch" registriert. Bei negativem Ergebnis wird die untersuchte Region als Hintergrundregion in das Maskenbild eingetragen. Anschließend wird das klassifizierte Maskenbild binärisiert, indem alle Vordergrundregionen auf "schwarz", die Hintergrundregionen und "Löcher" auf "weiß" gesetzt werden (Fig. 8). Die Segmentierung des Beispieldokumentes erfolgt gemäß Modus 1.

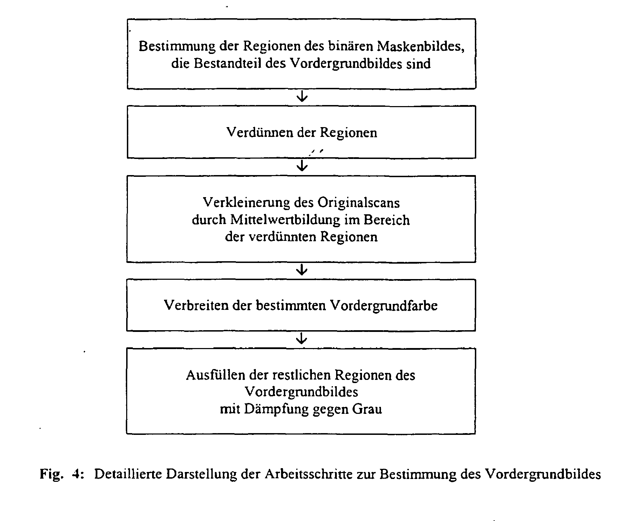

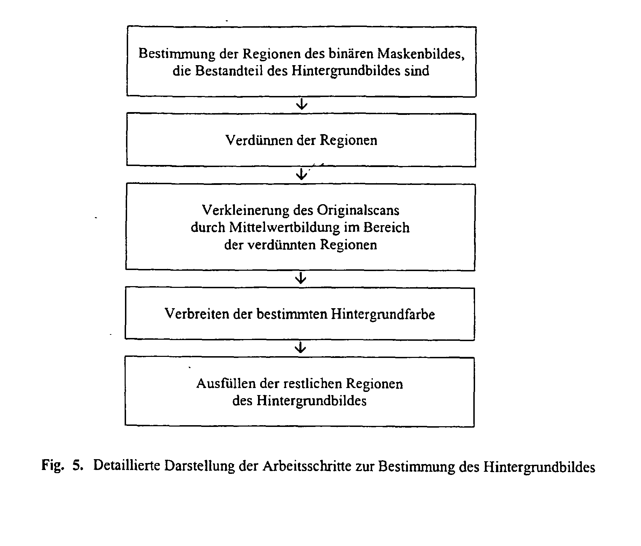

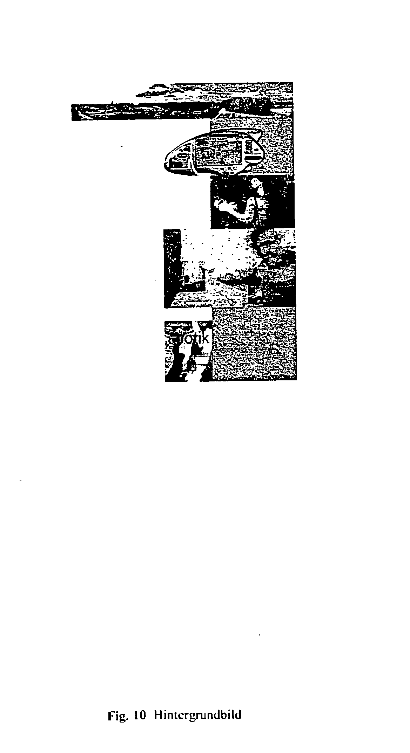

Aus dem binären Maskenbild und dem Originalbild wird gem. Fig. 4 das verkleinerte Vordergrundbild erzeugt, indem alle Vordergrundregionen zunächst um einen Pixel verdünnt werden und an Hand dieses verdünnten, binären Maskenbildes das Original auf ein Drittel seiner Größe verkleinert wird. Dazu werden sowohl Maskenbild als auch Originalbild in Blöcke von 3x3-Pixeln zerlegt. Über Anteile der verdünnten Vordergrundregion innerhalb eines solchen 3x3-Blockes wird der Mittelwert dieser Pixel in das verkleinerte Vordergrundbild übernommen. Enthält der 3x3-Block keine verdünnte Vordergrundregion, wird das entsprechende Pixel zu Null gesetzt. Die Vordergrundpixel mit Werten größer Null werden anschließend mit einer 5x5-Mittelwertfilterung ausgedehnt und die verbleibenden Pixel mit einem 5x5-Kern ausgefüllt, wobei ein konstanter Grauwert als zusätzlicher Anteil in die Mittelwertbildung einbezogen wird. Zur Bestimmung des Hintergrundbildes gem. Fig. 5 werden alle zum Hintergrund gehörigen Regionen im binären Maskenbild identifiziert und die Hintergrundregionen ebenfalls um ein Pixel verdünnt. Anschließend erfolgt die Zerlegung von Originalbild und verdünnten Maskenbild in 3x3-Blöcke. Danach wird analog dem Verfahrensschritt "Bestimmung des Vordergrundbildes" weiter verfahren. Das Ergebnis ist in Fig. 10 dargestellt.

Die gemäß Beispiel erzeugten Bilder "Vordergrund", "Hintergrund" und "binäres Maskenbild" werden anschließend mit an sich bekannten Bildkodern komprimiert, das Maskenbild beispielsweise mittels "Fax Group4", Vorder- und Hintergrundbild mittels Wavelet-Kodierung. Die Dekodierung erfolgt für die drei Teilbilder getrennt, indem die verkleinerten Vorder- und Hintergrundbilder durch lineare Interpolation auf die Größe des binären Maskenbildes gebracht werden. Für einen schwarzen Wert des binären Maskenbildes wird das rekonstruierte Bild aus den Pixeln des Vordergrundbildes, für einen weißen Wert aus den Pixeln des Hintergrundbildes zusammengesetzt.

Mit dem dargestellten erfindungsgemäßen Datenkompressionsverfahren wird damit die Kompression gescannter Dokumente ohne Einschränkung an deren Beschaffenheit, wie beispielsweise heller Hintergrund, rechteckige Abbildungen, exakte Trennung von Bild- und Textbestandteilen, ermöglicht. Der Aufwand an Rechenzeit und Speicherkapazität wird hinaus deutlich gesenkt. Darüber hinaus können unterschiedliche Dokumentenklassen und Bilder erstmalig nach einem einheitlichen Verfahren komprimiert werden.

## Patentansprüche

1. Verfahren zur Kompression von gescannten Farb- und/oder Graustufendokumenten, umfassend die Schritte
(a) Quantisierung des gescannten Dokumentes unter Erhalt eines bitonalen Quantisierungsbildes, umfassend das Erzeugen eines lokal variablen Schwellwertbildes;
(b) Segmentierung des Quantisierungsbildes unter Erzeugung eines binären Maskenbildes, indem Regionen des Quantisierungsbildes als Vordergrundregionen oder als Hintergrundregionen klassifiziert werden, wobei die Segmentierung die Teilschritte
(b1) Bestimmen aller verbundenen Regionen gleichen Wertes in dem Quantisierungsbild;
(b2) Größenfilterung der Regionen, wobei Regionen, die eine Mindestgröße unterschreiten und Regionen, die eine Maximalgroße überschreiten, eliminiert werden;
(b3) Durchführung einer Kantendetektion an den Rändem der Regionen, wobei die Regionen mit geringer Kantenaktivität eliminiert werden;
(b4) Durchführung einer Varianzbestimmung im Innenbereich der Regionen, wobei die Regionen, deren Varianz einen Maximalwert überschreitet, eliminiert werden; und
(b5) Klassifizierung der erhaltenen Regionen als Vordergrund, sofern sie keine andere bereits als Vordergrund klassifizierte Region berühren;
(c) Erzeugen eines Vordergrundbildes und eines Hintergrundbildes aus dem gescannten Dokument, wobei Regionen des gescannten Dokumentes, die in dem binären Maskenbild als Vordergrundregionen klassifiziert wurden, dem Vorgrundbild und Regionen des gescannten Dokumentes, die in dem binären Maskenbild als Hintergrundregionen klassifiziert wurden, dem Hintergrundbild zugeordnet werden und wobei das Vordergrundbild und das Hintergrundbild mit einer gegenüber dem Originalbild reduzierten Auflösung erzeugt wird; und
(d) Kodieren des Vordergrundbildes, des Hintergrundbildes und des binären Maskenbildes mit einem Bildkoder;
wobei im Falle von gescannten Farbdokumenten vor Schritt (a) ein Graustufenbild des gescannten Farbdokumentes erzeugt wird.

2. Verfahren nach Anspruch 1, **dadurch gekennzeichnet, daß** Schritt (a) die Schritte umfaßt:
(a1) Verkleinern des gescannten Dokumentes;
(a2) Erzeugung eines lokal variablen Schwellwertbildes des verkleinerten gescannten Dokumentes mittels eines adaptiven Schwellwertverfahrens;
(a3) Vergrößerung des Schwellwertbildes auf die ursprüngliche Größe des gescannten Dokumentes; und
(a4) Quantisierung des gescannten Dokumentes mit dem vergrößerten Schwellwerkbild.

3. Verfahren nach Anspruch 2, **dadurch gekennzeichnet, daß** Schritt (a2) die Schritte umfaßt:
(a21) Bestimmung der lokalen Dynamik des verkleinerten gescannten Bildes unter Erhalt eines Dynamikbildes, wobei das verkleinerte gescannte Bild einer Maximum- und Minimumfilterung unterzogen und aus der Differenz aus Maximum- und Minimumbild das Dynamikbild erzeugt wird;
(a22) Quantisierung des Dynamikbildes;
(a23) Bestimmung von Quantisierungsschellwerten; und
(a24) Tiefpaßfilterung der ermittelten Schwellwerte.

4. Verfahren einem der Ansprüche 1 bis 3, **dadurch gekennzeichnet, daß** Schritt (b3) die Schritte umfaßt
(b31) Ermitteln der Kantenaktivität der Randpixel der Regionen;
(b32) Vergleich der ermittelten Kantenaktivität mit einem Mindestaktivitätswert;
(b33) Bestimmen der mittleren und maximalen Kantenaktivität und der Varianz der Innenbereiche der Regionen; und
(b34) Prüfen für jede Region, ob die mittlere und maximale Kantenaktivität über vorgegebenen Mindestwerten liegen und die Varianz einen vorgegebenen Wert nicht übersteigt.

5. Verfahren nach Anspruch 4, **dadurch gekennzeichnet, daß** Schritt (b4) die Schritte umfaßt:
(b41) Klassifizieren einer Region als Vordergrundregion, wenn die mittlere und maximale Kantenaktivität der Region über den vorgegebenen Mindestwerten liegen, die Varianz den vorgegebenen Wert nicht übersteigt, und sie keine Region berührt, die bereits als Vordergrundregion klassifiziert worden ist; und Eintragung des Klassifizierungsergebnisses in das Maskenbild;
(b42) Klassifizieren einer Region als Loch, die mittlere und maximale Kantenaktivität der Region über den vorgegebenen Mindestwerten liegen, die Varianz den vorgegebenen Wert nicht übersteigt, und sie eine Region berührt, die bereits als Vordergrundregion klassifiziert worden ist; und Eintragung des Klassifizierungsergebnisses in das Maskenbild;
(b43) Klassifizieren einer Region als Hintergrundregion, wenn die mittlere und maximale Kantenaktivität der Region nicht über den vorgegebenen Mindestwerten liegen und die Varianz den vorgegebenen Wert übersteigt; und Eintragung des Klassifizierungsergebnisses in das Maskenbild.

6. Verfahren nach Anspruch 5, **dadurch gekennzeichnet, daß** zur Erzeugung des binären Maskenbildes die als Loch und die als Hintergrundregionen klassifizierten Regionen einer Klasse zugeordnet werden, während die Vordergrundregionen einer zweiten Klasse zugeordnet werden.

7. Verfahren nach einem der vorstehenden Ansprüche, **dadurch gekennzeichnet, daß** Textbestandteil des gescannten Dokumentes dem Vordergrundbild und Bildbestandteile des gescannten Dokumentes dem Hintergrundbild zugeordnet werden.

## Claims

1. Method for compressing color and/or grey-level scanned documents, comprising the steps
(a) quantization of the scanned document to obtain a bi-tonal quantization image, comprising the generation of a locally variable threshold image;
(b) segmentation of the quantization image to generate a binary mask image by classifying regions of the quantization image as foreground regions or as background regions, wherein the segmentation comprises the individual steps
(b1) determining all associated regions of the same value in the quantization image;
(b2) size filtering of the regions, wherein regions falling below a minimum size, and regions exceeding a maximum size are eliminated;
(b3) performing an edge detection at the borders of the regions, wherein the regions having low edge activity are eliminated;
(b4) performing a variance determination in the interior area of the regions, wherein the regions the variance of which exceeds a maximum value are eliminated; and
(b5) classifying of the regions obtained as foreground provided that they do not touch another region already classified as foreground;
(c) generation of a foreground image and a background image from the scanned document, wherein regions of the scanned document classified in the binary mask image as foreground regions are assigned to the foreground image and regions of the scanned document classified in the binary mask image as background regions are assigned to the background image, and wherein the foreground image and the background image are generated with a reduced resolution in comparison with the original image; and
(d) encoding the foreground image, the background image, and the binary mask image with an image encoder;
wherein in the case of scanned color documents a grey-level image of the scanned color document is generated before step (a).

2. Method according to claim 1, **characterized in that** step (a) comprises the steps:
(a1) decreasing the scanned document;
(a2) generating a locally variable threshold image of the decreased scanned document by means of an adaptive threshold method;
(a3) increasing the threshold image to the original size of the scanned document; and
(a4) quantizing the scanned document with the increased threshold image.

3. Method according to claim 2, **characterized in that** step (a2) comprises the steps:
(a21) determining the local dynamics of the decreased scanned image to obtain a dynamic image, wherein the decreased scanned image is subjected to a maximum and minimum filtering and the dynamic image is generated from the difference of maximum and minimum image;
(a22) quantizing the dynamic image;
(a23) determining of quantization thresholds; and
(a24) low-pass filtering of the thresholds established.

4. Method according to any one of claims 1 to 3, **characterized in that** step (b3) comprises the steps
(b31) establishing the edge activity of the region's border pixels;
(b32) comparing the established edge activity with a minimum activity value;
(b33) determining the mean and maximum edge activity and the variance of the interior areas of the regions; and
(b34) examining for each region whether the mean and maximum edge activity are above given minimum values and whether the variance does not exceed a given value.

5. Method according to claim 4, **characterized in that** step (b4) comprises the steps:
(b41) classifying a region as foreground region if the region's mean and maximum edge activity are above the given minimum value, the variance does not exceed the given value, and it does not touch a region that has already been classified as foreground region; and entering the classification result on the mask image;
(b42) classifying a region as hole if the region's mean and maximum edge activity are above the given minimum values, the variance does not exceed the given value, and it touches a region that has already been classified as foreground region; and entering the classification result on the mask image;
(b43) classifying a region as background region if the region's mean and maximum edge activity are not above the given minimum values and the variance exceeds the given value; and entering the classification result on the mask image.

6. Method according to claim 5, **characterized in that** in order to generate the binary mask image the regions classified as hole and as background regions are assigned to one class whereas the foreground regions are assigned to a second class.

7. Method according to any one of the preceding claims, **characterized in that** text components of the scanned document are assigned to the foreground image and image components of the scanned document are assigned to the background image.

## Revendications

1. Procédé de compression de documents couleur et/ou à nuances de gris scannés, comprenant les opérations
(a) quantification du document scanné pour obtention d'une image de quantification bitonale, comprenant la création d'une image à valeur seuil variable localement;
(b) segmentation de l'image de quantification en générant une image de masque en binaire en classifiant des régions de l'image de quantification en tant que régions de premier plan ou régions d'arrière-plan, la segmentation des opérations partielles
(b1) détermination de toutes les régions reliées de même valeur dans l'image de quantification;
(b2) filtrage de taille de régions, les régions sous-dépassant une taille minimale et les régions dépassant une taille maximale étant éliminées;
(b3) exécution d'une détection de bord sur les bords des régions, les régions ayant une faible activité de bord étant éliminées;
(b4) exécution d'une détermination de variance dans la zone intérieure des régions, les régions dont la variance dépasse une valeur maximale étant éliminées;
(b5) classification des régions obtenues comme premier plan dans la mesure où elles ne touchent aucune autre région déjà classifiée comme premier-plan;
(c) réalisation d'une image de premier-plan et d'une image d'arrière-plan à partir d'un document scanné, les régions du document scanné ayant été classifiées dans l'image de masque binaire comme régions de premier plan sont affectées à l'image de premier plan et les régions du document scanné ayant été classifiées dans l'image de masque binaire comme régions d'arrière-plan sont affectées à l'image d'arrière-plan et l'image de premier plan et l'image d'arrière-plan étant générées avec une résolution réduite par rapport à l'image d'origine; et
(d) codage de l'image de premier plan, de l'image d'arrière-plan et de l'image de masque binaire avec un codeur d'image;
dans le cas de documents couleur scannés, une image à nuances de gris du document couleur scanné étant générée avant l'opération (a).

2. Procédé selon la revendication 1 **caractérisé en ce que** l'opération (a) comprend les opérations:
(a1) réduction du document scanné;
(a2) création d'une image de valeur seuil variable localement du document scanné réduit par le biais d'un procédé de valeur seuil adaptif;
(a3) augmentation de l'image de valeur seuil à la taille d'origine du document scanné; et
(a4) quantification du document scanné avec l'image de valeur seuil agrandie.

3. Procédé selon la revendication 2 **caractérisé en ce que** l'opération (a2) comprend les opérations:
(a21) détermination de la dynamique locale de l'image scannée réduite en maintenant l'image dynamique, l'image scannée réduite étant soumise à un filtrage maximum et minimum et l'image dynamique est générée à partir de la différence de l'image maximale et de l'image minimale;
(a22) quantification d'image dynamique;
(a23) détermination de valeurs seuil de quantification;
(a24) filtrage passe-bas des valeurs seuil obtenues.

4. Procédé selon l'une des revendications 1 à 3 **caractérisé en ce que** l'opération (b3) comprend les opérations:
(b31) détermination de l'activité de bord des pixels périphériques des régions;
(b32) comparaison de l'activité de bord obtenue avec une valeur minimale;
(b33) détermination de l'activité de bord moyenne et maximale et de la variance des zones intérieures des régions; et
(b34) contrôle pour chaque région si l'activité moyenne et maximale de bord se situe au-dessus des valeurs minimales données et si la variance ne dépasse pas une valeur donnée.

5. Procédé selon la revendication 4 **caractérisé en ce que** l'opération (b4) comprend les opérations:
(b41) classification d'une région comme région de premier plan si l'activité moyenne et maximale de bord de la région se situent au-dessus des valeurs minimales données et si la variance ne dépasse pas la valeur donnée et qu'elle ne touche aucune région ayant déjà été classée comme région de premier plan; et inscription du résultat de classification dans l'image de masque;
(b42)classification d'une région comme trou si l'activité moyenne et maximale de bord de la région se situe au-dessus des valeurs minimales données et si la variance ne dépasse pas la valeur donnée et qu'elle touche une région ayant déjà été classée comme région de premier plan; et inscription du résultat de classification dans l'image de masque;
(b43) classification d'une région comme région d'arrière-plan si l'activité moyenne et maximale de bord de la région ne se situent pas au-dessus des valeurs minimales données et si la variance dépasse la valeur donnée; et inscription du résultat de classification dans l'image de masque.

6. Procédé selon la revendication 5 **caractérisé en ce que** pour générer l'image de masque binaire, les régions classifiées comme trou et celle comme région d'arrière-plan sont affectées à une clase alors que les régions de premier plan sont affectées à une deuxième classe.

7. Procédé selon l'une des revendications précédentes **caractérisé en ce que** l'élément texte du document scanné est affecté à l'image de premier plan et les éléments images du document scanné à l'image d'arrière-plan,
